(19) **Europäisches Patentamt / European Patent Office / Office européen des brevets**

(11) **EP 4 787 788 A1**

(12) **EUROPEAN PATENT APPLICATION**
published in accordance with Art. 153(4) EPC

(43) Date of publication:
**05.08.2026 Bulletin 2026/32**

(21) Application number: **24876656.0**

(22) Date of filing: **11.10.2024**

(51) International Patent Classification (IPC):
***H04L 25/02*** *(2006.01)*

(52) Cooperative Patent Classification (CPC):
**H04L 25/02**

(86) International application number:
**PCT/CN2024/124258**

(87) International publication number:
**WO 2025/077851 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.10.2023 CN 202311331856**

(71) Applicant: **HUAWEI TECHNOLOGIES CO., LTD.**
**Shenzhen 518129 (CN)**

(72) Inventors:
• **GAO, Xiang**
  **Shenzhen, Guangdong 518129 (CN)**
• **ZHANG, Zijian**
  **Shenzhen, Guangdong 518129 (CN)**
• **ZHANG, Zhening**
  **Shenzhen, Guangdong 518129 (CN)**
• **LIU, Kunpeng**
  **Shenzhen, Guangdong 518129 (CN)**

(74) Representative: **Körber, Martin Hans**
**Mitscherlich PartmbB**
**Karlstraße 7**
**80333 München (DE)**

(54) **COMMUNICATION METHOD AND APPARATUS**

(57) This application relates to a communication method and apparatus. In the communication method, an offset and a first value indicated by first information are associated with a first index value and a second index value. This indicates that both the first index value and the second index value are determined based on the offset and the first value, and any change in the offset and the first value results in corresponding changes to the first index value and the second index value. In addition, since the first index value and the second index value are associated with a first sequence, a terminal device may simultaneously control, based on the first information, the first index value and the second index value for determining the first sequence, enabling the first sequence to be selected from a larger set of available sequences, thereby achieving better interference randomization performance. This reduces the likelihood that the first sequence determined by the terminal device is the same as a sequence used in a neighboring cell, which could cause the neighboring cell to use a same reference signal. Therefore, interference problems caused by the neighboring cell using the same reference signal are alleviated, thereby improving accuracy of channel estimation.

Terminal device → Network device

201: Send first information, where the first information indicates a first value, the first value and an offset are associated with a first index value and a second index value, and the first index value and the second index value are associated with a first sequence

202: Determine the first sequence based on the first information

203: Receive a reference signal from the terminal device, where the reference signal is determined based on the first sequence

FIG. 2

EP 4 787 788 A1

**Description**

This application claims priority to Chinese Patent Application No. 202311331856.2, filed with the China National Intellectual Property Administration on October 13, 2023 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In communication technologies, a reference signal, for example, a sounding reference signal (sounding reference signal, SRS), is generated based on a base sequence (base sequence), which may be generated according to a Zadoff-chu (Zadoff-chu, ZC) sequence.

To enable orthogonal multiplexing of reference signals in a cell, a same base sequence may be generally allocated to the cell to generate reference signals. Different base sequences are allocated to different cells to generate reference signals. However, because a quantity of cells is greater than a quantity of available base sequences, neighboring cells may be allocated a same base sequence and consequently use the same reference signals. This may cause high interference intensity for the reference signals, affecting accuracy of channel estimation.

**SUMMARY**

This application provides a communication method and apparatus to reduce interference problems caused by neighboring cells using a same reference signal, thereby improving accuracy of channel estimation.

According to a first aspect, a communication method is provided. The method may be performed by a terminal device, may be performed by a module (for example, a processor, a chip, or a chip system) used in the terminal device, or may be implemented by a logical node, a logical module, or software that can implement all or some functions of the terminal device. In the communication method, first information from a network device may be received, where the first information indicates a first value, the first value and an offset are associated with a first index value and a second index value, and the first index value and the second index value are associated with a first sequence, so that the first sequence can be determined based on the first information, and a reference signal can be sent to the network device, where the reference signal is determined based on the first sequence.

It can be learned that, in the foregoing embodiment, the offset and the first value indicated by the first information are associated with the first index value and the second index value. This indicates that both the first index value and the second index value are determined based on the offset and the first value, and any change in the offset and the first value results in corresponding changes to the first index value and the second index value. In addition, since the first index value and the second index value are associated with the first sequence, the terminal device may simultaneously control, based on the first information, the first index value and the second index value for determining the first sequence, enabling the first sequence to be selected from a larger set of available sequences, thereby achieving better interference randomization performance is achieved. In other words, this reduces the likelihood that the first sequence determined by the terminal device is the same as a sequence used in a neighboring cell, which could cause the neighboring cell to use a same reference signal. Therefore, interference problems caused by the neighboring cell using the same reference signal may be alleviated, thereby improving accuracy of channel estimation. In addition, the first index value and the second index value are associated with a same offset, ensuring that a same sequence collision does not occur on different sequences configured by using different values of the first value when group hopping (group hopping) or sequence hopping (sequence hopping) are enabled.

With reference to the first aspect, optionally, that the first value and the offset are associated with the first index value may be understood as that the first index value is determined based on the first value and the offset. For example, the first index value meets the following condition: $u = (f_{gh} + n_{ID}) \mod X$, where, $f_{gh}$ is the offset, $n_{ID}$ is the first value, and X is an integer greater than or equal to 30. The offset is 0; or the offset is determined based on a third index value, at least one index difference, and a second value. The third index value is an index value of a first time unit occupied by the reference signal in a system frame corresponding to a transmission occasion of the reference signal, the index difference is a difference between an index value of a time subunit occupied by the reference signal within the first time unit and an index value of a starting time subunit, the starting time subunit is a 1st time subunit occupied by the reference signal within the first time unit, and the second value is an integer greater than 30. The first time unit may be understood as a time unit corresponding to the transmission occasion of the reference signal, or the time unit occupied by the reference signal.

It can be learned that, in the foregoing embodiment, the second value is an integer greater than 30. This ensures that when values of $n_{ID}$ are different, offsets corresponding to reference signals multiplexed in a same time unit are the same. Therefore, it can be ensured that for cells that are configured by using different values of $n_{ID}$ and that use different sequences, when group hopping or sequence hopping is enabled, a sequence collision problem still does not exist in different reference signals multiplexed in a same time unit.

That the offset is determined based on the third index value, the at least one index difference, and the second value may alternatively be phrased as: The offset is determined based on the third index value, the index value of the time subunit occupied by the reference signal within the first time unit, and the second value.

With reference to the first aspect, optionally, that the first value and the offset are associated with the second index value may be understood as that the second index value is determined based on the first value and the offset. For example, the second index value meets the following condition: $v = \left\lfloor \frac{f_{gh}+n_{ID}}{X} \right\rfloor \bmod \mathrm{Y}$, where $f_{gh}$ is the offset, $n_{ID}$ is the first value, X is an integer greater than or equal to 30, and Y is an integer greater than or equal to 2. The offset is 0; or the offset is determined based on the third index value, the at least one index difference, and the second value. The third index value is the index value of the first time unit occupied by the reference signal in the system frame corresponding to the transmission occasion of the reference signal, the index difference is the difference between the index value of the time subunit occupied by the reference signal within the first time unit and the index value of the starting time subunit, the starting time subunit is the 1st time subunit occupied by the reference signal within the first time unit, and the second value is the integer greater than 30.

It can be learned that, in the foregoing embodiment, when values of $n_{ID}$ are different, a sequence corresponding to $u = 0,1 ...,29$ and $v = 0,1$ may be configured. Compared with a case in which only $v = 0$ is configured, this is equivalent to increasing a quantity of sequences that can be used, and reducing a probability of generating interference from the same sequence, thereby improving accuracy of channel estimation.

With reference to the first aspect, optionally, when group hopping and sequence hopping are disabled, the offset is 0.

With reference to the first aspect, optionally, when group hopping or sequence hopping is enabled, the offset is determined based on the third index value, the at least one index difference, and the second value.

With reference to the first aspect, optionally, the offset meets the following condition:

$$f_{gh} = \left( \sum_{m=0}^{T-1} c \left( T \left( n_{s,f}^{\mu} N_{symb}^{slot} + l_0 + l' \right) + m \right) \cdot 2^m \right) \bmod K$$

, where $m$ is an integer greater than or equal to 0 and less than or equal to $T$ - 1, $T$ is a positive integer, $c$ is a random sequence, $n_{s,f}^{\mu}$ is the third index value, $N_{symb}^{slot}$ is a quantity of time subunits included in a time unit, $l_0$ is the index value of the starting time subunit, $l'$ is the at least one index difference, and $K$ is the second value. Herein, $l_0 + l'$ may indicate the index value of the time subunit occupied by the reference signal within the first time unit.

With reference to the first aspect, optionally, that the offset is determined based on the third index value, the at least one index difference, and the second value includes: The offset is determined based on the third index value, the at least one index difference, the second value, and an index value of the system frame corresponding to the transmission occasion of the reference signal. For example, the offset meets the following condition:

$$f_{gh} = \left( \sum_{m=0}^{T-1} c \left( T \left( \left( n_{slot}^{frame,\mu} \left( n_f \bmod F \right) + n_{s,f}^{\mu} \right) N_{symb}^{slot} + l_0 + l' \right) + m \right) \cdot 2^m \right) \bmod K$$

, where $m$ is an integer greater than or equal to 0 and less than or equal to $T$ - 1, $T$ is a positive integer, $c$ is a random sequence, $n_{slot}^{frame,\mu}$ is a quantity of time units in a system frame, $n_f$ is the index value of the system frame corresponding to the transmission occasion of the reference signal, $F$ is a positive integer, $n_{s,f}^{\mu}$ is the third index value, $N_{symb}^{slot}$ is a quantity of time subunits included in a time unit, $l_0$ is the index value of the starting time subunit, $l'$ is the at least one index difference, and $K$ is the second value.

With reference to the first aspect, optionally, that the offset is determined based on the third index value, the at least one index difference, the second value, and the index value of the system frame corresponding to the transmission occasion of the reference signal includes: The offset is determined based on the third index value, the at least one index difference, the second value, the index value of the system frame corresponding to the transmission occasion of the reference signal, and a repetition factor. For example, the offset meets the following condition:

$$f_{gh} = \left( \sum_{m=0}^{T-1} c \left( T \left( \left( n_{slot}^{frame,\mu} \left( n_f \bmod F \right) + n_{s,f}^{\mu} \right) N_{symb}^{slot} + l_0 + \lfloor l'/R \rfloor R \right) + m \right) \cdot 2^m \right) \bmod K$$

,

where m is an integer greater than or equal to 0 and less than or equal to $T$-1, $T$ is a positive integer, $c$ is a random sequence, $n_{slot}^{frame,\mu}$ is the quantity of time units in the system frame, $n_f$ is the index value of the system frame corresponding to the transmission occasion of the reference signal, F is the positive integer, $n_{s,f}^{\mu}$ is the third index value, $N_{symb}^{slot}$ is the quantity of time subunits included in the time unit, $l_0$ is the index value of the starting time subunit, $l'$ is the at least one index difference, R is a repetition factor, and $K$ is the second value.

It can be learned that, in the foregoing embodiment, a parameter $n_f$ is introduced to determine the offset. This increases an initialization period of group hopping or sequence hopping, so that when group hopping or sequence hopping is enabled, randomization effect of sequence selection is better. In addition, the offset is calculated in the foregoing manner, so that when values of $n_{ID}$ are different, it can be ensured that offsets corresponding to reference signals multiplexed in a same time unit are the same. Therefore, it can be ensured that for cells that are configured by using different values of $n_{ID}$ and that use different sequences, when group hopping or sequence hopping is enabled, a sequence collision problem still does not exist in different reference signals multiplexed in a same time unit.

With reference to the first aspect, optionally, the second value is determined based on X and Y. For example, the second value is a product of X and Y. X is an integer greater than or equal to 30, and Y is an integer greater than or equal to 2.

With reference to the first aspect, optionally, X is 30, Y is 2, and the second value is 60.

According to a second aspect, a communication method is provided. The method may be performed by a terminal device, may be performed by a module (for example, a processor, a chip, or a chip system) used in the terminal device, or may be implemented by a logical node, a logical module, or software that can implement all or some functions of the terminal device. In the communication method, first information from a network device may be received, where the first information indicates a first value, the first value and an offset are associated with a first index value, and the first index value and a second index value are associated with a first sequence; when the first value meets a first condition, the second index value is a second value; and when the first value meets a second condition, the second index value is a third value, or the second index value is associated with the first value and the offset, so that the first sequence can be determined based on the first information, and a reference signal is sent to the network device, where the reference signal is determined based on the first sequence.

It can be learned that, in the foregoing embodiment, when the first value indicated by the first information meets the first condition, the second index value is the second value; and when the first value meets the second condition, the second index value is the third value, or the second index value is associated with the first value and the offset. That is, in different cases, the second index value is determined in different manners. However, the offset and the first value are associated with the first index value, and the first index value and the second index value are associated with the first sequence. This enables terminal devices with different capabilities to determine the second index value based on a condition that the first value meets, and further determine the corresponding first sequence. In other words, a value range of the first value determines a value range of the second index value. For a legacy (legacy) terminal, when group hopping and sequence hopping are not activated or group hopping is activated, the second index value is 0. This can ensure that when group hopping and sequence hopping are not activated, and the configured second index value is also 0, a same sequence may be configured for a new terminal device and the legacy terminal device and multiplexed on a same time-frequency resource, to ensure that no collision of the same sequence occurs when group hopping or sequence hopping is activated. In addition, for the new terminal device, when group hopping and sequence hopping are not activated, and the configured second index value is 1, the first sequence may be selected from a larger set of available sequences, thereby achieving better interference randomization performance. In this way, interference problems caused by neighboring cells may be alleviated, thereby improving accuracy of channel estimation.

With reference to the second aspect, optionally, the first condition is $\left\lfloor \frac{n_{ID}}{X} \right\rfloor \bmod Y = 0$, and/or the second condition is $\left\lfloor \frac{n_{ID}}{X} \right\rfloor \bmod Y = 1$, where $n_{ID}$ is the first value, X is an integer greater than or equal to 30, and Y is an integer greater than or equal to 2.

With reference to the second aspect, optionally, that the first value and the offset are associated with the first index value may be understood as that the first index value is determined based on the first value and the offset. For example, the first index value meets the following condition: $u = (f_{gh} + n_{ID}) \bmod X$, where, $f_{gh}$ is the offset, $n_{ID}$ is the first value, and X is an integer greater than or equal to 30. The offset is 0; or the second index value is the second value or the third value, and the offset is determined based on a third index value, at least one index difference, and a fifth value; or the second index value is associated with the first value and the offset, and the offset is determined based on the third index value, the at least one index difference, and a fourth value. The third index value is an index value of a first time unit occupied by the reference signal in a system frame corresponding to a transmission occasion of the reference signal, the index difference is a difference between an index value of a time subunit occupied by the reference signal within the first time unit and an index value of a starting time subunit, the starting time subunit is a 1st time subunit occupied by the reference signal within the first time unit, the fifth value is 30, and the fourth value is an integer greater than 30.

It can be learned that, in the foregoing embodiment, the offset is determined based on the third index value, the at least one index difference, and the fourth value, and the fourth value is an integer greater than 30. This ensures that when values of $n_{ID}$ are different, offsets corresponding to reference signals multiplexed in a same time unit are the same. Therefore, it can be ensured that for cells that are configured by using different values of $n_{ID}$ and that use different sequences, when group hopping or sequence hopping is enabled, a sequence collision problem still does not exist in different reference signals multiplexed in a same time unit.

That the offset is determined based on the third index value, the at least one index difference, and the fifth value may alternatively be phrased as: The offset is determined based on the third index value, the index value of the time subunit occupied by the reference signal within the first time unit, and the fifth value. Similarly, that the offset is determined based on the third index value, the at least one index difference, and the fourth value may alternatively be phrased as: The offset is determined based on the third index value, the index value of the time subunit occupied by the reference signal within the first time unit, and the fourth value.

With reference to the second aspect, optionally, that the second index value is associated with the first value and the offset may be understood as that the second index value is determined based on the first value and the offset. For example, the second index value meets the following condition: $v = \left\lfloor \frac{f_{gh}+n_{ID}}{X} \right\rfloor \bmod Y$, where $f_{gh}$ is the offset, $n_{ID}$ is the first value, X is an integer greater than or equal to 30, and Y is an integer greater than or equal to 2. The offset is 0; or the offset is determined based on the third index value, the at least one index difference, and the fourth value. The third index value is the index value of the first time unit occupied by the reference signal in the system frame corresponding to the transmission occasion of the reference signal, the index difference is the difference between the index value of the time subunit occupied by the reference signal within the first time unit and the index value of the starting time subunit, the starting time subunit is the 1st time subunit occupied by the reference signal within the first time unit, and the fourth value is the integer greater than 30.

It can be learned that, in the foregoing embodiment, when values of $n_{ID}$ are different, a sequence corresponding to $u = 0,1 \ldots,29$ and $v = 0,1$ may be configured. Compared with a case in which only $v = 0$ is configured, this is equivalent to increasing a quantity of sequences that can be used, and reducing a probability of generating interference from the same sequence, thereby improving accuracy of channel estimation.

With reference to the second aspect, optionally, when group hopping and sequence hopping are disabled, the offset is 0.

With reference to the second aspect, optionally, when group hopping or sequence hopping is enabled, the offset is determined based on the third index value, the at least one index difference, and the fifth value. For example, the offset meets the following condition: $f_{gh} = \left( \sum_{m=0}^{T-1} c \left( T \left( n_{s,f}^{\mu} N_{symb}^{slot} + l_0 + l' \right) + m \right) \cdot 2^m \right) \bmod X$, where m is an integer greater than or equal to 0 and less than or equal to T - 1, T is a positive integer, $c$ is a random sequence, $n_{s,f}^{\mu}$ is the third index value, $N_{symb}^{slot}$ is a quantity of time subunits included in a time unit, $l_0$ is the index value of the starting time subunit, $l'$ is the at least one index difference, and X is the fifth value. Herein, $l_0 + l'$ may indicate the index value of the time subunit occupied by the reference signal within the first time unit.

With reference to the second aspect, optionally, when group hopping or sequence hopping is enabled, the offset is determined based on the third index value, the at least one index difference, and the fourth value. For example, the offset meets the following condition: $f_{gh} = \left( \sum_{m=0}^{T-1} c \left( T \left( n_{s,f}^{\mu} N_{symb}^{slot} + l_0 + l' \right) + m \right) \cdot 2^m \right) \bmod K$, where m is an integer greater than or equal to 0 and less than or equal to T - 1, T is a positive integer, c is a random sequence, $n_{s,f}^{\mu}$ is the third index value, $N_{symb}^{slot}$ is the quantity of time subunits included in the time unit, $l_0$ is the index value of the starting time subunit, $l'$ is the at least one index difference, and K is the fourth value. Herein, $l_0 + l'$ may indicate the index value of the time subunit occupied by the reference signal within the first time unit.

With reference to the second aspect, optionally, that the offset is determined based on the third index value, the at least one index difference, and the fourth value includes: The offset is determined based on the third index value, the at least one index difference, the fourth value, and an index value of the system frame corresponding to the transmission occasion of the reference signal. For example, the offset meets the following condition:

$$f_{\text{gh}} = \left( \sum_{m=0}^{T-1} c \left( T \left( \left( n_{slot}^{frame,\mu} \left( n_f \bmod F \right) + n_{s,f}^{\mu} \right) N_{symb}^{slot} + l_0 + l' \right) + m \right) \cdot 2^m \right) \bmod K$$ , where

m is an integer greater than or equal to 0 and less than or equal to $T$ - 1, $T$ is a positive integer, $c$ is a random sequence, $n_{slot}^{frame,\mu}$ is a quantity of time units in a system frame, $n_f$ is the index value of the system frame corresponding to the transmission occasion of the reference signal, $F$ is the positive integer, $n_{s,f}^{\mu}$ is the third index value, $N_{symb}^{slot}$ is the quantity of time subunits included in the time unit, $l_0$ is the index value of the starting time subunit, $l'$ is the at least one index difference, and $K$ is the fourth value.

With reference to the second aspect, optionally, that the offset is determined based on the third index value, the at least one index difference, the fourth value, and the index value of the system frame corresponding to the transmission occasion of the reference signal includes: The offset is determined based on the third index value, the at least one index difference, the fourth value, the index value of the system frame, and a repetition factor. For example, the offset meets the following                                                    condition:

$$f_{\text{gh}} = \left( \sum_{m=0}^{T-1} c \left( T \left( \left( n_{slot}^{frame,\mu} \left( n_f \bmod F \right) + n_{s,f}^{\mu} \right) N_{symb}^{slot} + l_0 + \lfloor l'/R \rfloor R \right) + m \right) \cdot 2^m \right) \bmod K$$

, where m is an integer greater than or equal to 0 and less than or equal to $T$ - 1, $T$ is a positive integer, c is a random sequence, $n_{slot}^{frame,\mu}$ is the quantity of time units in the system frame, $n_f$ is the index value of the system frame corresponding to the transmission occasion of the reference signal, $F$ is the positive integer, $n_{s,f}^{\mu}$ is the third index value, $N_{symb}^{slot}$ is the quantity of time subunits included in the time unit, $l_0$ is the index value of the starting time subunit, $l'$ is the at least one index difference, R is the repetition factor, and $K$ is the fourth value.

It can be learned that, in the foregoing embodiment, a parameter $n_f$ is introduced to determine the offset. This increases an initialization period of group hopping or sequence hopping, so that when group hopping or sequence hopping is enabled, randomization effect of sequence selection is better. In addition, the offset is calculated in the foregoing manner, so that when values of $n_{ID}$ are different, it can be ensured that offsets corresponding to reference signals multiplexed in a same time unit are the same. Therefore, it can be ensured that for cells that are configured by using different values of $n_{ID}$ and that use different sequences, when group hopping or sequence hopping is enabled, a sequence collision problem still does not exist in different reference signals multiplexed in a same time unit.

With reference to the second aspect, optionally, the fourth value is determined based on X and Y. For example, the fourth value is a product of X and Y. X is an integer greater than or equal to 30, and Y is an integer greater than or equal to 2.

With reference to the second aspect, optionally, X is 30, Y is 2, and the fourth value is 60.

According to a third aspect, a communication apparatus is provided, including a unit or a module configured to implement the method according to any one of the implementations of the first aspect and the second aspect. The communication apparatus may be a terminal device, may be a module (for example, a processor, a chip, or a chip system) of the terminal device, or may be a logical node, a logical module, or software that can implement all or some functions of the terminal device.

According to a fourth aspect, a communication apparatus is provided. The communication apparatus includes at least one processor. The at least one processor is configured to perform the method according to any one of the implementations of the first aspect and the second aspect. The communication apparatus may be a terminal device, may be a module (for example, a processor, a chip, or a chip system) of the terminal device, or may be a logical node, a logical module, or software that can implement all or some functions of the terminal device. The at least one processor may execute a computer program or instructions in a memory, so that the foregoing method is performed. The memory may be included in the communication apparatus, or may be located outside the communication apparatus. In addition, the communication apparatus may further include an interface.

According to a fifth aspect, a computer-readable storage medium is provided. The computer-readable storage medium stores computer instructions. When the computer instructions are executed, a computer is enabled to perform the method according to any one of the implementations of the first aspect and the second aspect.

According to a sixth aspect, a computer program product is provided. The computer program product includes computer program code. When the computer program code is run by a computer, the computer is enabled to perform the method according to any one of the implementations of the first aspect and the second aspect.

According to a seventh aspect, a chip is provided. The chip includes at least one processor and an interface. The processor is configured to read and execute instructions stored in a memory. When the instructions are run, the chip is enabled to perform the method according to any one of the implementations of the first aspect and the second aspect.

**BRIEF DESCRIPTION OF DRAWINGS**

FIG. 1 shows a basic architecture of a communication system according to an embodiment of this application;
FIG. 2 is a schematic flowchart of a communication method according to an embodiment of this application;
FIG. 3 is a diagram of a pattern of group hopping or sequence hopping;
FIG. 4 is a diagram of neighboring cells using different sequences according to an embodiment of this application;
FIG. 5 is a schematic flowchart of another communication method according to an embodiment of this application;
FIG. 6 is another diagram of neighboring cells using different sequences according to an embodiment of this application;
FIG. 7 is a diagram of a structure of a communication apparatus according to an embodiment of this application; and
FIG. 8 is a diagram of a structure of another communication apparatus according to an embodiment of this application.

**DESCRIPTION OF EMBODIMENTS**

The following describes the technical solutions in embodiments of this application with reference to the accompanying drawings in embodiments of this application. The terms "system" and "network" may be used interchangeably in embodiments of this application. Unless otherwise specified, "/" indicates an "or" relationship between associated objects. For example, A/B may indicate A or B. In this application, "and/or" indicates only an association relationship for describing associated objects and indicates that three relationships may exist. For example, A and/or B may indicate the following three cases: Only A exists, both A and B exist, and only B exists. A and B may be singular or plural. In addition, in the descriptions of this application, unless otherwise specified, "a plurality of" means two or more than two. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that have basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have" and their variants all mean "include but are not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that the technical solutions in embodiments of this application may be applied to a long term evolution (long term evolution, LTE) architecture, a 5th generation mobile communication technology (5th generation mobile network, 5G), a wireless local area network (wireless local area network, WLAN) system, a vehicle-to-everything (vehicle-to-everything, V2X) communication system, LTE-vehicle (LTE-vehicle, LTE-V), vehicle-to-vehicle (vehicle-to-vehicle, V2V), internet of vehicles, machine type communications (machine type communications, MTC), and the like. The technical solutions in embodiments of this application may be further applied to another future communication system, for example, a 6G communication system. In the future communication system, same functions may be maintained, but a name may be changed.

The following describes a basic architecture of a communication system provided in embodiments of this application. The communication system provided in this application may include one or more network devices and one or more terminal devices.

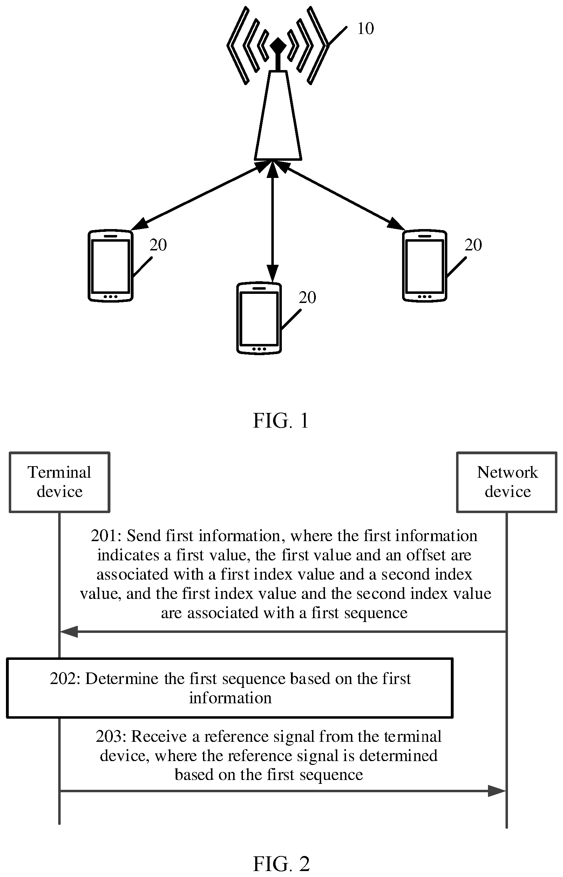

The following uses a system architecture shown in FIG. 1 as an example for description. As shown in FIG. 1, the communication system includes a network device 10 and one or more terminal devices (for example, terminal devices 20 in FIG. 1) communicating with the network device 10.

It should be noted that quantities of network devices and terminal devices in FIG. 1 are merely examples, and should not be considered as a specific limitation on this application. The following further describes in detail devices in the system architecture.

I. Terminal device

The terminal device is an entity that is on a user side and that is configured to receive a signal, or send a signal, or receive a signal and send a signal. The terminal device is configured to provide one or more of a voice service and a data connectivity service for a user. The terminal device may be a device that includes a wireless transceiver function and that can cooperate with the network device to provide a communication service for a user. Specifically, the terminal device may refer to user equipment (user equipment, UE), an access terminal, a subscriber unit, a subscriber station, a mobile station, a remote station, a remote terminal, a mobile device, a terminal, a wireless communication device, a user agent, a user apparatus, or a road side unit (road side unit, RSU). The terminal device may alternatively be an uncrewed aerial vehicle, an internet of things (internet of things, IoT) device, a station (station, ST) in a wireless local area network (wireless local area network, WLAN), a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a compute device or another processing device connected to a wireless modem, an in-vehicle device, a wearable device (also referred to as a wearable smart device), a virtual reality (virtual reality, VR) terminal, an augmented reality (augmented reality, AR) terminal, a wireless terminal in remote medical (remote medical), a wireless terminal in industrial control (industrial control), a wireless terminal in self driving (self driving), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a terminal in a 5G system, or a terminal in a next-generation communication system. This is not limited in embodiments of this application.

A device form of the terminal device is not limited in embodiments of this application. An apparatus for implementing a function of a terminal device may be a terminal device, or may be an apparatus, for example, a chip system, that can support a terminal device to implement the function. The apparatus may be mounted in the terminal device or used in combination with the terminal device. In this embodiment of this application, the chip system may include a chip, or may include a chip and another discrete component.

II. Network device

The network device is an entity that is on a network side and that is configured to send a signal, receive a signal, or send a signal and receive a signal. The network device may be an apparatus deployed in a radio access network (radio access network, RAN) to provide a wireless communication function for the terminal device.

In a possible scenario, the network device may be a device having a base station function, for example, an evolved NodeB (evolved NodeB, eNodeB), a transmitting and receiving point (transmitting and receiving point, TRP), a transmitting point (transmitting point, TP), a next generation NodeB (next generation NodeB, gNB), a next generation base station in a 6G mobile communication system, an integrated access and backhaul (integrated access and backhaul, IAB) node, or a non-terrestrial network device in an NTN, that is, a device, a satellite, or the like that may be deployed on a high-altitude platform. The network device may be a transmission reception point (transmission reception point, TRP), a base station, or a control node in various forms, for example, a network controller or a wireless controller. Specifically, the network device may be a macro base station in various forms, a micro base station (also referred to as a small cell) in a heterogeneous network (heterogeneous network, HetNet) scenario, a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU) and a radio frequency unit (remote radio unit, RRU) in a distributed base station scenario, a transmission point (transmitting and receiving point, TRP), a transmitting point (transmitting point, TP), a mobile switching center, or the like, or may be an antenna panel of a base station. The control node may be connected to a plurality of base stations, and configure resources for a plurality of terminals covered by the plurality of base stations. A device with a base station function may have different names in systems using different radio access technologies For example, the device may be a gNB in 5G, a network side device in a network after 5G, a network device in a future evolved public land mobile (communication) network (public land mobile network, PLMN), or a device that has a function of a base station in device-to-device (device-to-device, D2D) communication, machine-to-machine (machine-to-machine, M2M) communication, or internet of vehicles communication. A specific name of the network device is not limited in this application. The network device may alternatively be a baseband unit pool (BBU pool), an RRU, or the like in an open access network (open RAN, O-RAN or ORAN) or a cloud radio access network (cloud radio access network, CRAN).

All or a part of functions of the network device in this application may alternatively be implemented through a software function running on hardware, or implemented through a virtualized function instantiated on a platform (for example, a cloud platform). The network device in this application may alternatively be a logical node, a logical module, or software that can implement all or some functions of the network device.

In another possible scenario, a plurality of network devices collaborate to assist the terminal device in implementing wireless access, and different network devices separately implement a part of functions of the base station. For example, the network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the network device is not limited in embodiments of this application. An apparatus for implementing a function of the network device may be a network device, or may be an apparatus, for example, a chip system, that can support the network device in implementing the function. The apparatus may be mounted in the network device or used in combination with the network device.

To facilitate understanding of content of the solutions, the following further explains and describes some terms in embodiments of this application, so as to facilitate understanding by a person skilled in the art. This part is merely for ease of understanding, and cannot be considered as a specific limitation on this application.

1. Reference signal

The reference signal may be used for one or more of channel estimation, a channel measurement, time synchronization, frequency synchronization, and the like. For example, the reference signal may be a sounding reference signal (sounding reference signal, SRS), or may be a tracking reference signal (tracking reference signal, TRS), a phase tracking reference signal (phase tracking reference signal, PTRS), a channel state information reference signal (channel state information reference signal, CSI-RS), a demodulation reference signal (demodulation reference signal, DMRS), a positioning reference signal (positioning reference signal, PRS), a synchronization signal block (synchronization signal block, SSB), or the like. This is not limited in this application.

2. Sequence

The sequence mentioned in this application may be referred to as a base sequence (base sequence or root sequence), and the sequence may include at least one of the following: a Zadoff-chu (Zadoff-chu, ZC) sequence, a Gold (Gold) sequence, a Hadamard (Hadamard) sequence, and the like. Alternatively, the sequence may be a sequence generated by performing cyclic extension or truncation on at least one of a Zadoff-chu (Zadoff-chu, ZC) sequence, a Gold (Gold) sequence, a Hadamard (Hadamard) sequence, and the like. Alternatively, the sequence may be determined based on a pseudo-random sequence. For example, the sequence is the pseudo-random sequence, or is a sequence generated by performing cyclic extension or truncation on the pseudo-random sequence. The pseudo-random sequence is a random sequence generated in a predefined random sequence generation manner.

Optionally, there may be one or more sequences. One cell may be allocated one sequence for generating the reference signal. It is assumed that the reference signal is an SRS, and an SRS sequence correspondingly sent through a

port $p_i$ (where $i$ is an integer greater than or equal to 0 and less than or equal to Nap, and Nap is a quantity of ports corresponding to the reference signal) may meet the following condition:

$$r^{(p_i)}(n) = r_{u,v}^{(\alpha_i,\delta)}(n).$$

Herein, $n$ is an integer greater than or equal to 0 and less than $M_{sc,b}^{SRS} - 1$, and $n$ is a number of a sequence element. $M_{sc,b}^{SRS}$ is a length of the SRS sequence, $M_{sc,b}^{SRS} = mN_{sc}^{RB}/2^{\delta}$, $m$ is a quantity of resource blocks (resource block, RB) occupied for sending the SRS sequence during one frequency hopping, and $N_{sc}^{RB}$ is a quantity of subcarriers in one RB.

$\delta = \log_2(K_{TC})$, $K_{TC}$ is a comb spacing, that is, a spacing between two consecutive frequency domain units (for example, subcarriers) occupied by the reference signal in frequency domain.

$\alpha_i$ is a cyclic shift (cyclic shift, CS) of a code domain corresponding to the port $p_i$, and may alternatively be simply described as $\alpha$. $\alpha_i = 2\pi \dfrac{n_{SRS}^{cs,i}}{n_{SRS}^{cs,max}}$. Herein,

$$n_{SRS}^{cs,i} = \begin{cases} \left(n_{SRS}^{cs} + \dfrac{n_{SRS}^{cs,max}\lfloor(p_i-1000)/2\rfloor}{N_{ap}^{SRS}/2}\right) \bmod n_{SRS}^{cs,max} & \text{if } N_{ap}^{SRS} = 4 \text{ and } n_{SRS}^{cs,max}=6 \\ \left(n_{SRS}^{cs} + \dfrac{n_{SRS}^{cs,max}(p_i-1000)}{N_{ap}^{SRS}}\right) \bmod n_{SRS}^{cs,max} & \text{otherwise} \end{cases}.$$

$n_{SRS}^{cs,i} \in \{0,1,...,n_{SRS}^{cs,max} - 1\}$ represents reference positions (or referred to as start positions) of CSs occupied by a plurality of ports corresponding to an SRS resource allocated to the terminal device, and may be configured using a transmissionComb parameter in a radio resource control (radio resource control, RRC) message. $n_{SRS}^{cs,max}$ represents a maximum value of the CS that can be supported, or a maximum quantity of CSs that can be configured. Optionally, $n_{SRS}^{cs,max}$ and $K_{TC}$ may be jointly configured, and a correspondence between $n_{SRS}^{cs,max}$ and $K_{TC}$ may be shown in Table 1.

Table 1

| $K_{TC}$ | $n_{SRS}^{cs,max}$ |
|---|---|
| 2 | 8 |
| 4 | 12 |
| 8 | 6 |

$r_{u,v}^{(\alpha,\delta)}(n) = e^{j\alpha n}\bar{r}_{u,v}(n)$, and $\bar{r}_{u,v}(n)$ is a sequence (a first sequence in the following), and may also be referred to as an SRS base sequence. When $\bar{r}_{u,v}(n)$ is the first sequence in the following, u and v are respectively a first index value and a second index value below. When a length of the first sequence meets $M_{ZC} \geq 3N_{sc}^{RB}$, the sequence $\bar{r}_{u,v}(0), ..., \bar{r}_{u,v}(M_{ZC} - 1)$ may be calculated according to the following formula:

$$\bar{r}_{u,v}(n) = x_q(n \bmod M_{ZC}),$$

and $x_q = e^{-\dfrac{\pi q m(m+1)}{N_{ZC}}}$. $q = \lfloor \bar{q} + 1/2 \rfloor + v \cdot (-1)^{\lfloor 2\bar{q}\rfloor}$, $\bar{q} = N_{ZC} \cdot (u + 1)31$, and $N_{ZC}$ is a maximum prime number less than $M_{ZC}$.

Generally, a same base sequence may be allocated to a cell to generate reference signals, so as to ensure orthogonal multiplexing of the reference signals in the cell. Different base sequences are allocated to different cells to generate reference signals. However, because a quantity of cells is greater than a total quantity of available base sequences, neighboring cells may be allocated a same base sequence and consequently use the same reference signal. This may cause high interference intensity for the reference signal, affecting accuracy of channel estimation. In view of this, this application provides a communication method, to resolve this problem.

The following describes embodiments of this application in detail. Specifically, a terminal device and a network device in the following may be respectively the terminal device and the network device in FIG. 1. It should be noted that names of messages between network elements, names of parameters in the messages, or the like in the following embodiments are merely examples, and there may be other names in a specific implementation. This is not specifically limited in embodiments of this application.

FIG. 2 shows a communication method according to an embodiment of this application. The communication method includes but is not limited to the following steps.

201: A network device sends first information to a terminal device, where the first information indicates a first value, the first value and an offset are associated with a first index value and a second index value, and the first index value and the second index value are associated with a first sequence.

Correspondingly, the terminal device receives the first information from the network device.

202: The terminal device determines the first sequence based on the first information.

203: The network device receives a reference signal from the terminal device, where the reference signal is determined based on the first sequence.

Correspondingly, the terminal device sends the reference signal to the network device.

The following describes specific implementations of step 201 to step 203.

Optionally, the first information is a first field, or the first information includes a first field. The first field may be referred to as a sequence identifier (sequenceId) field. In this case, a value of the first field may be the first value, and the first value may be represented by $n_{ID}$. The first value may be $2^N - 1$, and $N$ is an integer greater than or equal to 1. For example, the first value may be any integer from 0 to 1023, or may be described as $n_{ID} \in \{0, 1, ..., 1023\}$. Alternatively, the first value may be any integer from 0 to 65535, or may be described as $n_{ID} \in \{0, 1, ..., 65535\}$.

Optionally, $n_{ID} = PCI \bmod K$. $PCI$ is a cell identifier. The cell identifier mentioned in this application may be, for example, a physical cell identifier (physical cell identifier, PCI). "mod" mentioned in this application represents a modulo operation. $K$ is a second value, and is an integer greater than 30. Optionally, the second value may be determined based on X and Y. For example, the second value is a product of X and Y. X is an integer greater than or equal to 30, and Y is an integer greater than or equal to 2. When X is 30 and Y is 2, the second value may be 60.

Optionally, the first information may be carried in, for example, an RRC message, downlink control information (downlink control information, DCI), or a media access control-control element (media access control-control element, MAC CE).

Optionally, that the first value and the offset are associated with the first index value may be understood as that the first index value is determined based on the first value and the offset. For example, the first index value meets the following condition: $u = (f_{gh} + n_{ID}) \bmod X$, where $f_{gh}$ is the offset, and $n_{ID}$ is the first value. Similarly, that the first value and the offset are associated with the second index value may be understood as that the second index value is determined based on the first value and the offset. For example, the second index value meets the following condition: $v = \left\lfloor \dfrac{f_{gh} + n_{ID}}{X} \right\rfloor \bmod Y$. That is, it can be learned that both the first index value and the second index value are determined based on the offset and the first value.

The offset may be implemented in the following several manners. Details are as follows:

1. The offset is 0. For example, when group hopping and sequence hopping are disabled, the offset is 0.

It should be noted that group hopping and sequence hopping in this application may also have other names, which are not limited herein. In addition, whether group hopping or sequence hopping is enabled may be indicated based on second information. For example, the terminal device receives the second information from the network device indicating that group hopping or sequence hopping is disabled, or indicating that group hopping or sequence hopping is enabled. Here, enabled may also be referred to as activated, and disabled may also be referred to as deactivated or not enabled.

Optionally, the second information may be or include a second field, which may be referred to as a group or sequence hopping (groupOrSequenceHopping) field. Optionally, the second information and the first information may be carried in the same or different RRC messages, DCI, or MAC CEs.

2. The offset is determined based on a third index value, at least one index difference, and the second value. Optionally, that the offset is determined based on the third index value, the at least one index difference, and the second value may alternatively be phrased as: The offset is determined based on the third index value, an index value of a time subunit occupied by the reference signal within the first time unit, and the second value. The first time unit is a time unit occupied by the reference signal in a system frame corresponding to a transmission occasion of the reference signal. Optionally, there may be one or more first time units.

The third index value is an index value of the first time unit, and may be represented by $n_{s,f}^{\mu}$. The index difference is a difference between the index value of the time subunit occupied by the reference signal within the first time unit and an index value of a starting time subunit, and may be represented by $l'$. The starting time subunit is a 1st time subunit occupied by the reference signal within the first time unit.

For example, when group hopping or sequence hopping is disabled, the offset is determined based on the third index value, the at least one index difference, and the second value. Optionally, the offset may alternatively be determined based on the index value of the starting time subunit and a quantity of time subunits included in a time unit. In this case, the offset meets the following condition: $f_{gh} = \left( \sum_{m=0}^{T-1} c \left( T \left( n_{s,f}^{\mu} N_{symb}^{slot} + l_0 + l' \right) + m \right) \cdot 2^m \right) \bmod K$.

$m$ is an integer greater than or equal to 0 and less than or equal to $T$-1. $T$ is a positive integer, or may be described as a quantity of bits corresponding to the offset. Optionally, $T$ may be 8 or 9.

$c$ is a random sequence, which may also be described as $c(i)$. Optionally, $c(i)$ meets the following conditions: $c(n) = (x_1(n+N_c) + x_2(n+N_c)) \bmod 2$, $x_1(n+31) = (x_1(n+3) + x_1(n)) \bmod 2$, and $x_2(n+31) = (x_2(n+3) + x_2(n+2) + x_2(n+1) + x_2(n)) \bmod 2$. $N_c = 1600$. A 1st m-sequence $x_1(n)$ is initialized with $x_1(0) = 0$, where $n$ is an integer greater than or equal to 1 and less than or equal to 30. A 2nd m-sequence $x_2(n)$ is initialized with $c_{init} = \sum_{i=0}^{30} x_2(i) \cdot 2^i$, and $c_{init}$ may be independently configured for the terminal device. For example, $c_{init} = n_{ID}$ or $c_{init}$ is a cell identifier. $N_{symb}^{slot}$ is a quantity of time subunits included in a time unit. The time unit herein may be a time unit in a general sense, that is, not limited to any specific time unit. Alternatively, the time unit may be a specific time unit, for example, the first time unit. In an implementation, $N_{symb}^{slot}$ is a quantity of time subunits included in the first time unit.

$l_0$ is the index value of the starting time subunit, for example, $l_0 = N_{symb}^{slot} - 1 - l_{offset}$. $l_{offset}$ is an integer greater than or equal to 0 and less than or equal to 13, or may be described as $l_{offset} \in \{0,1, ...,13\}$. Optionally, $l_0$ may be configured using a start position (startPosition) field. Herein, $l_0 + l'$ may indicate the index value of the time subunit occupied by the reference signal within the first time unit.

It should be noted that the time unit mentioned in this application may be at least one slot or another predefined time granularity, and the at least one slot may also be described as a slot set or a slot group. The time subunit mentioned in this application may be at least one symbol (or referred to as an orthogonal frequency-division multiplexing (orthogonal frequency-division multiplexing, OFDM) symbol) or another predefined time granularity, and the at least one symbol may also be described as a symbol set or a symbol group. When a cyclic prefix (cyclic prefix, CP) is a normal cyclic prefix (normal CP, NCP), the slot includes 14 symbols. When a cyclic prefix is an extended cyclic prefix (extended CP, ECP), the slot includes 12 symbols. Certainly, with evolution of communication technologies, a quantity of symbols included in the slot may alternatively be another value. This is not limited in this application.

Optionally, when the offset is determined based on the third index value, the at least one index difference, the second value, the index value of the starting time subunit, and the quantity of time subunits included in the time unit, the offset may alternatively be determined based on a quantity of time units in the system frame and an index value of the system frame corresponding to the transmission occasion of the reference signal. In this case, the offset meets the following condition:

$$f_{gh} = \left( \sum_{m=0}^{T-1} c \left( T \left( \left( n_{slot}^{frame,\mu} (n_f \bmod F) + n_{s,f}^{\mu} \right) N_{symb}^{slot} + l_0 + l' \right) + m \right) \cdot 2^m \right) \bmod K$$

Herein, $n_{slot}^{frame,\mu}$ is a quantity of time units in a system frame. The system frame herein may be a system frame in a general sense, that is, no system frame is limited. Alternatively, the system frame may be a specific system frame, for example, the system frame corresponding to the transmission occasion of the reference signal, or a system frame occupied by the reference signal. In an implementation, $n_{slot}^{frame,\mu}$ is the quantity of time units in the system frame corresponding to the transmission occasion of the reference signal.

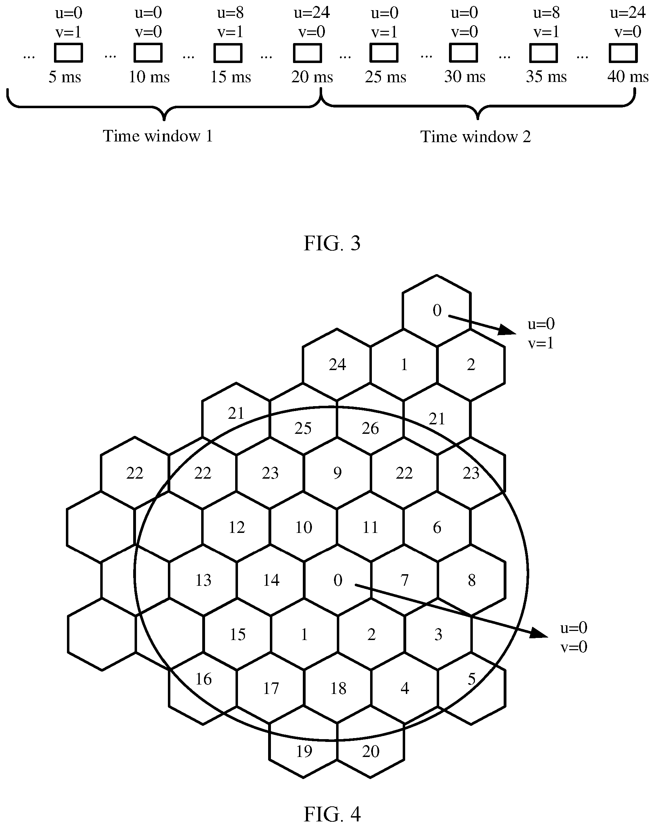

$n_f$ is the index value of the system frame corresponding to the transmission occasion of the reference signal. $F$ is a positive integer, and indicates an initialization period of group hopping or sequence hopping. In other words, in a time window whose length is $F$ system frames, values of offsets corresponding to different transmission occasion s are not completely the same, but in different time windows, values of offsets corresponding to $k^{th}$ transmission occasion s are the same, where k is an integer greater than or equal to 0. Further, in a time window whose length is $F$ system frames, sequences corresponding to different transmission occasion s are not completely the same, but in different time windows, $k^{th}$ transmission occasion s corresponds to a same sequence. As shown in FIG. 3, it is assumed that a value of F is 2, the reference signal is an SRS, a sending period of the SRS is 5 ms, duration of the system frame is 10 milliseconds (ms), and the time window is 20 ms. At a $5^{th}$ ms and a $25^{th}$ ms, $u = 0$, and v = 1, for example, this corresponds to a sequence 1. At a $10^{th}$ ms and a $30^{th}$ ms, $u = 0$, and v = 0, for example, this corresponds to a sequence 2. At a $15^{th}$ ms and a $35^{th}$ ms, $u = 8$, and v = 1, for example, this corresponds to a sequence 3. At a $20^{th}$ ms and a $40^{th}$ ms, $u = 24$, and v = 0, for example, this corresponds to a sequence 4. It is assumed that the $5^{th}$ ms to the $20^{th}$ ms are referred to as a time window 1, and the $20^{th}$ ms to the $40^{th}$ ms are referred to as a time window 2. It can be learned that, a permutation of a sequence used by each SRS transmission occasion in the time window 1 is the same as a permutation of a sequence used by each SRS transmission occasion in the time window 2. This may be referred to as that patterns of group hopping or sequence hopping are the same.

Optionally, when the offset is determined based on the third index value, the at least one index difference, the second value, the index value of the starting time subunit, the quantity of time subunits included in the time unit, the quantity of time units in the system frame, and the index value of the system frame corresponding to the transmission occasion of the reference signal, the offset may alternatively be determined based on a repetition factor. For example, the offset meets the following condition:

$$f_{\text{gh}} = \left(\sum_{m=0}^{T-1} c\left(T\left(\left(n_{slot}^{frame,\mu}(n_f \bmod F) + n_{s,f}^{\mu}\right) N_{symb}^{slot} + l_0 + \lfloor l'/R \rfloor R\right) + m\right) \cdot 2^m\right) \bmod K \ .$$

R is a repetition factor, and the repetition factor may indicate that the reference signal is sent on a same time-frequency resource through a same port in R consecutive time subunits.

The following summarizes the first index value $u$ and the second index value v with reference to the foregoing descriptions. Details are as follows:

$$u = \left(f_{\text{gh}} + n_{ID}\right) \bmod \text{X, and } v = \left\lfloor \frac{f_{\text{gh}} + n_{ID}}{\text{X}} \right\rfloor \bmod \text{Y}.$$

When group hopping and sequence hopping are disabled, $f_{\text{gh}} = 0$.

When group hopping or sequence hopping is enabled,

$$f_{\text{gh}} = \left(\sum_{m=0}^{T-1} c\left(T\left(\left(n_{slot}^{frame,\mu}(n_f \bmod F) + n_{s,f}^{\mu}\right) N_{symb}^{slot} + l_0 + l'\right) + m\right) \cdot 2^m\right) \bmod K \text{ or}$$

$$f_{\text{gh}} = \left(\sum_{m=0}^{T-1} c\left(T\left(\left(n_{slot}^{frame,\mu}(n_f \bmod F) + n_{s,f}^{\mu}\right) N_{symb}^{slot} + l_0 + \lfloor l'/R \rfloor R\right) + m\right) \cdot 2^m\right) \bmod K.$$

Optionally, $F$ may be 1. It may be understood that, when $F$ is 1, a manner of calculating the offset may be simplified. Details are as follows:

$$f_{\text{gh}} = \left(\sum_{m=0}^{T-1} c\left(T\left(\left(n_{slot}^{frame,\mu}(n_f \bmod F) + n_{s,f}^{\mu}\right) N_{symb}^{slot} + l_0 + l'\right) + m\right) \cdot 2^m\right) \bmod K \text{ , which}$$

may be simplified to $f_{\text{gh}} = \left(\sum_{m=0}^{T-1} c\left(T\left(n_{s,f}^{\mu} N_{symb}^{slot} + l_0 + l'\right) + m\right) \cdot 2^m\right) \bmod K$ .

$$f_{\text{gh}} = \left(\sum_{m=0}^{T-1} c\left(T\left(\left(n_{slot}^{frame,\mu}(n_f \bmod F) + n_{s,f}^{\mu}\right) N_{symb}^{slot} + l_0 + \lfloor l'/R \rfloor R\right) + m\right) \cdot 2^m\right) \bmod K$$

, which may be simplified to $f_{\text{gh}} = \left(\sum_{m=0}^{T-1} c\left(T\left(n_{s,f}^{\mu} N_{symb}^{slot} + l_0 + \lfloor l'/R \rfloor R\right) + m\right) \cdot 2^m\right) \bmod K$ .

Optionally, that the first index value and the second index value are associated with the first sequence may also be understood as follows: The first index value may be used to determine a sequence group, and the second index value may be used to determine the first sequence in the sequence group. It may also be said that the first sequence is the foregoing $\bar{r}_{u,v}(n)$. For example, it is assumed that there are 30 sequence groups in total, and index values are respectively 0 to 29. $u = 0$, which represents a sequence group whose index value is 0. It is assumed that the sequence group whose index value is 0 includes two sequences, and index values are respectively 0 and 1. $v = 0$, which represents that the sequence whose index value is 0 is the first sequence.

Optionally, that the terminal device determines the first sequence based on the first information may be understood as follows: The terminal device determines the first index value and the second index value based on the first value and the offset; and the terminal device determines the first sequence based on the first index value and the second index value. For example, it is assumed that X is 30, and Y is 2. When the first value $n_{ID} = 0, 1, ..., 29$, based on $u = (f_{gh} + n_{ID})$mod 2, the corresponding first index value $u = 0, 1, ..., 29$ may be obtained, and based on $v = \left\lfloor \frac{f_{gh} + n_{ID}}{X} \right\rfloor \bmod Y$, the second index value $v = 0$ may be obtained. When the first value $n_{ID} = 30, 31, ..., 59$, based on $u = (f_{gh} + n_{ID})$mod 2, the corresponding first index value $u = 0, 1, ..., 29$ may be obtained, and based on $v = \left\lfloor \frac{f_{gh} + n_{ID}}{X} \right\rfloor \bmod Y$, the second index value $v = 1$ may be obtained. This can ensure that a quantity of sequences that can be used is 60, that is, no same sequence occurs in 60 cells. For example, refer to FIG. 4. In FIG. 4, neighboring cells are two cells numbered 0, and the cells use different sequences. For example, one cell uses a sequence with the first index value $u = 0$ and the second index value $v = 0$, and the other cell uses a sequence with the first index value $u = 0$ and the second index value $v = 1$. In this way, interference problems caused by neighboring cells using a same reference signal are alleviated, thereby improving accuracy of channel estimation.

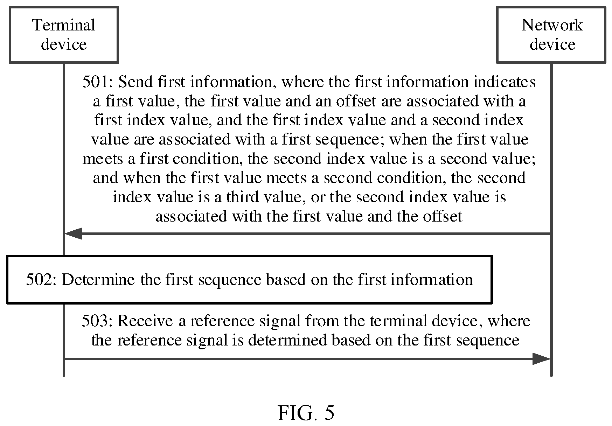

FIG. 5 is another communication method according to an embodiment of this application. The communication method includes but is not limited to the following steps:

501: A network device sends first information to a terminal device, where the first information indicates a first value, the first value and an offset are associated with a first index value, and the first index value and a second index value are associated with a first sequence; when the first value meets a first condition, the second index value is a second value; and when the first value meets a second condition, the second index value is a third value, or the second index value is associated with the first value and the offset.

502: The terminal device determines the first sequence based on the first information.

Step 502 is similar to step 202 in FIG. 2, and details are not described herein again.

503: The network device receives a reference signal from the terminal device, where the reference signal is determined based on the first sequence.

Correspondingly, the terminal device sends the reference signal to the network device.

The following describes specific implementations of step 501 to step 503.

For the first information, refer to related descriptions in FIG. 2. Details are not described herein again.

Optionally, the first value is $n_{ID} = PCI \bmod K$. $PCI$ is a cell identifier, for example, a physical cell identifier (physical cell identifier, PCI). "mod" in this application represents a modulo operation. $K$ is a fourth value, and is an integer greater than 30. Optionally, the fourth value may be determined based on X and Y, where X is an integer greater than or equal to 30, and Y is an integer greater than or equal to 2. For example, the fourth value is a product of X and Y. It should be understood that when X is 30 and Y is 2, the fourth value may be 60.

The first condition is $\left\lfloor \frac{n_{ID}}{X} \right\rfloor \bmod Y = 0$. The second condition is $\left\lfloor \frac{n_{ID}}{X} \right\rfloor \bmod Y = 1$.

Optionally, the second value is different from the third value. For example, the second value is 0, and the third value is 1; or the second value is 1, and the third value is 0.

Optionally, that the first value and the offset are associated with the first index value may be understood as that the first index value is determined based on the first value and the offset. For example, the first index value meets the following condition: $u = (f_{gh} + n_{ID}) \bmod X$, where $f_{gh}$ is the offset, and $n_{ID}$ is the first value. That the second index value is associated with the first value and the offset may be understood as that the second index value is determined based on the first value and the offset. For example, the second index value meets the following condition: $v = \left\lfloor \frac{f_{gh} + n_{ID}}{X} \right\rfloor \bmod Y$.

The following describes the offset in detail with reference to a condition that the first value meets.

1. When the first value meets the first condition, the offset may be implemented in the following several manners. Details are as follows:

Manner (1): The offset is 0. For example, when group hopping and sequence hopping are disabled, the offset is 0.
Manner (2): The offset is determined based on a third index value, at least one index difference, and a fifth value.

Optionally, that the offset is determined based on the third index value, the at least one index difference, and the fifth value may alternatively be phrased as: The offset is determined based on the third index value, an index value of a time subunit occupied by the reference signal in a time unit in a system frame corresponding to a transmission occasion of the reference signal, and the fifth value.

For the third index value, the index difference, and the like, refer to related descriptions in FIG. 2. Details are not described herein again.

For example, when group hopping or sequence hopping is disabled, the offset is determined based on the third index value, the at least one index difference, and the fifth value. Optionally, the offset may alternatively be determined based on an index value of the starting time subunit and a quantity of time subunits included in a time unit. In this case, the offset meets the following condition: $f_{\text{gh}} = \left( \sum_{m=0}^{T-1} c \left( T \left( n_{s,f}^{\mu} N_{symb}^{slot} + l_0 + l' \right) + m \right) \cdot 2^m \right) \ mod \ X$. For $m$,

$T$, $c$, $N_{symb}^{slot}$, $l_0$, and $l'$, refer to related descriptions in FIG. 2. Details are not described herein again. $X$ is the fifth value.

Optionally, when the offset is determined based on the third index value, the at least one index difference, the fifth value, the index value of the starting time subunit, and the quantity of time subunits included in the time unit, the offset may alternatively be determined based on a quantity of time units in the system frame and an index value of the system frame corresponding to the transmission occasion of the reference signal. In this case, the offset meets the following condition:

$$f_{\text{gh}} = \left( \sum_{m=0}^{T-1} c \left( T \left( \left( n_{slot}^{frame,\mu} \left( n_f \ mod \ F \right) + n_{s,f}^{\mu} \right) N_{symb}^{slot} + l_0 + l' \right) + m \right) \cdot 2^m \right) \ mod \ X$$. For

$n_{slot}^{frame,\mu}$, $n_f$, and $F$, refer to related descriptions in FIG. 2. Details are not described herein again.

Optionally, when the offset is determined based on the third index value, the at least one index difference, the fifth value, the index value of the starting time subunit, the quantity of time units in the system frame, and the index value of the system frame corresponding to the transmission occasion of the reference signal, the offset may alternatively be determined based on a repetition factor. For example, the offset meets the following condition:

$$f_{\text{gh}} = \left( \sum_{m=0}^{T-1} c \left( T \left( \left( n_{slot}^{frame,\mu} \left( n_f \ mod \ F \right) + n_{s,f}^{\mu} \right) N_{symb}^{slot} + l_0 + \lfloor l'/R \rfloor R \right) + m \right) \cdot 2^m \right) \ mod \ X$$

. For R, refer to related descriptions in FIG. 2. Details are not described herein again.

2. When the second value meets the second condition, the offset may be implemented in the following several manners. Details are as follows:

(1) When the second index value is the third value, for the offset, refer to Manner (1) or Manner (2).
(2) When the second index value is associated with the first value and the offset, there may be the following two cases, and details are as follows:

Case 1: The offset is 0. For example, when group hopping or sequence hopping is disabled, the offset is 0.
Case 2: The offset is determined based on the third index value, the at least one index difference, and the fourth value. Optionally, that the offset is determined based on the third index value, the at least one index difference, and the fourth value may alternatively be phrased as: The offset is determined based on the third index value, an index value of a time subunit occupied by the reference signal in a first time unit, and the fourth value. For the first time unit, refer to related descriptions in FIG. 2. Details are not described herein again.

For example, when group hopping or sequence hopping is disabled, the offset is determined based on the third index value, the at least one index difference, and the fourth value. Optionally, the offset may alternatively be determined based on the index value of the starting time subunit and a quantity of time subunits included in a time unit. In this case, the offset meets the following condition: $f_{\text{gh}} = \left( \sum_{m=0}^{T-1} c \left( T \left( n_{s,f}^{\mu} N_{symb}^{slot} + l_0 + l' \right) + m \right) \cdot 2^m \right) \ mod \ K$.

Optionally, when the offset is determined based on the third index value, the at least one index difference, the fourth value, the index value of the starting time subunit, and the quantity of time subunits included in the time unit, the offset may alternatively be determined based on the quantity of time units in the system frame and the index value of the system frame corresponding to the transmission occasion of the reference signal. In this case, the offset meets the following condition:

$$f_{\text{gh}} = \left( \sum_{m=0}^{T-1} c \left( T \left( \left( n_{slot}^{frame,\mu} \left( n_f \ mod \ F \right) + n_{s,f}^{\mu} \right) N_{symb}^{slot} + l_0 + l' \right) + m \right) \cdot \ 2^m \right) \ mod \ K$$. For n

$n_{slot}^{frame,\mu}$, $n_f$, and $F$, refer to related descriptions in FIG. 2. Details are not described herein again.

Optionally, when the offset is determined based on the third index value, the at least one index difference, the fourth value, the index value of the starting time subunit, the quantity of time units in the system frame, and the index value of the system frame corresponding to the transmission occasion of the reference signal, the offset may alternatively be determined based on the repetition factor. For example, the offset meets the following condition:

$$f_{gh} = \left(\sum_{m=0}^{T-1} c\left(T\left(\left(n_{slot}^{frame,\mu}(n_f \bmod F) + n_{s,f}^{\mu}\right)N_{symb}^{slot} + l_0 + \lfloor l'/R \rfloor R\right) + m\right)\cdot 2^m\right) \bmod K$$

. For R, refer to related descriptions in FIG. 2. Details are not described herein again.

The following summarizes the first index value $u$ and the second index value v with reference to the foregoing descriptions. Details are as follows:

First case:

When $\left\lfloor \frac{n_{ID}}{X} \right\rfloor \bmod Y = 0$, $u = (f_{gh} + n_{ID})\bmod X$, and v = 0 (that is, the second index value is the second value).

When group hopping and sequence hopping are disabled, $f_{gh} = 0$.

When group hopping or sequence hopping is enabled,

$$f_{gh} = \left(\sum_{m=0}^{T-1} c\left(T\left(n_{s,f}^{\mu}N_{symb}^{slot} + l_0 + l'\right) + m\right)\cdot 2^m\right) \bmod X .$$

When $\left\lfloor \frac{n_{ID}}{X} \right\rfloor \bmod Y = 1$, $u = (f_{gh} + n_{ID})\bmod X$, and v = 1 (that is, the second index value is the third value).

When group hopping and sequence hopping are disabled, $f_{gh} = 0$.

When group hopping or sequence hopping is enabled,

$$f_{gh} = \left(\sum_{m=0}^{T-1} c\left(T\left(\left(n_{slot}^{frame,\mu}(n_f \bmod F) + n_{s,f}^{\mu}\right)N_{symb}^{slot} + l_0 + l'\right) + m\right)\cdot 2^m\right) \bmod X$$ or

$$f_{gh} = \left(\sum_{m=0}^{T-1} c\left(T\left(\left(n_{slot}^{frame,\mu}(n_f \bmod F) + n_{s,f}^{\mu}\right)N_{symb}^{slot} + l_0 + \lfloor l'/R \rfloor R\right) + m\right)\cdot 2^m\right) \bmod X$$

.

Second case:

When $\left\lfloor \frac{n_{ID}}{X} \right\rfloor \bmod Y = 0$, $u = (f_{gh} + n_{ID})\bmod X$, and v = 0 (that is, the second index value is the second value).

When group hopping and sequence hopping are disabled, $f_{gh} = 0$.

When group hopping or sequence hopping is enabled,

$$f_{gh} = \left(\sum_{m=0}^{T-1} c\left(T\left(n_{s,f}^{\mu}N_{symb}^{slot} + l_0 + l'\right) + m\right)\cdot 2^m\right) \bmod X .$$

When $\left\lfloor \frac{n_{ID}}{X} \right\rfloor \bmod Y = 1$, $u = (f_{gh} + n_{ID})\bmod X$, and $v = \left\lfloor \frac{f_{gh}+n_{ID}}{X} \right\rfloor \bmod Y$.

When group hopping and sequence hopping are disabled, $f_{gh} = 0$.

When group hopping or sequence hopping is enabled,

$$f_{gh} = \left(\sum_{m=0}^{T-1} c\left(T\left(\left(n_{slot}^{frame,\mu}(n_f \bmod F) + n_{s,f}^{\mu}\right)N_{symb}^{slot} + l_0 + l'\right) + m\right)\cdot 2^m\right) \bmod K$$ or

$$f_{gh} = \left(\sum_{m=0}^{T-1} c\left(T\left(\left(n_{slot}^{frame,\mu}(n_f \bmod F) + n_{s,f}^{\mu}\right)N_{symb}^{slot} + l_0 + \lfloor l'/R \rfloor R\right) + m\right)\cdot 2^m\right) \bmod K .$$

Optionally, $F$ may be 1. It may be understood that, when $F$ is 1, a manner of calculating the offset may be simplified. Details are as follows:

$$f_{gh} = \left(\sum_{m=0}^{T-1} c\left(T\left(\left(n_{slot}^{frame,\mu}(n_f \bmod F) + n_{s,f}^{\mu}\right)N_{symb}^{slot} + l_0 + l'\right) + m\right)\cdot 2^m\right) \bmod X$$, which

may be simplified to $f_{\mathrm{gh}} = \left(\sum_{m=0}^{T-1} c\left(T\left(n_{s,f}^{\mu} N_{symb}^{slot} + l_0 + l'\right) + m\right) \cdot 2^m\right) \bmod X$ .

$f_{\mathrm{gh}} = \left(\sum_{m=0}^{T-1} c\left(T\left(\left(n_{slot}^{frame,\mu}(n_f \bmod F) + n_{s,f}^{\mu}\right) N_{symb}^{slot} + l_0 + \lfloor l'/R \rfloor R\right) + m\right) \cdot 2^m\right) \bmod X$,

, which may be simplified to $f_{\mathrm{gh}} = \left(\sum_{m=0}^{T-1} c\left(T\left(n_{s,f}^{\mu} N_{symb}^{slot} + l_0 + \lfloor l'/R \rfloor R\right) + m\right) \cdot 2^m\right) \bmod X$ .

$f_{\mathrm{gh}} = \left(\sum_{m=0}^{T-1} c\left(T\left(\left(n_{slot}^{frame,\mu}(n_f \bmod F) + n_{s,f}^{\mu}\right) N_{symb}^{slot} + l_0 + l'\right) + m\right) \cdot 2^m\right) \bmod K$ , which

may be simplified to $f_{\mathrm{gh}} = \left(\sum_{m=0}^{T-1} c\left(T\left(n_{s,f}^{\mu} N_{symb}^{slot} + l_0 + l'\right) + m\right) \cdot 2^m\right) \bmod K$ .

$f_{\mathrm{gh}} = \left(\sum_{m=0}^{T-1} c\left(T\left(\left(n_{slot}^{frame,\mu}(n_f \bmod F) + n_{s,f}^{\mu}\right) N_{symb}^{slot} + l_0 + \lfloor l'/R \rfloor R\right) + m\right) \cdot 2^m\right) \bmod K$,

, which may be simplified to $f_{\mathrm{gh}} = \left(\sum_{m=0}^{T-1} c\left(T\left(n_{s,f}^{\mu} N_{symb}^{slot} + l_0 + \lfloor l'/R \rfloor R\right) + m\right) \cdot 2^m\right) \bmod K$ .

The following describes the first index value and the second index value with reference to specific examples.

For example, it is assumed that there are 60 sequences in total, and the 60 sequences are divided into two sequence sets: a sequence set 1 and a sequence set 2. 30 sequences with $v = 0$ included in the sequence set 1 are divided into 30 sequence groups, and index values are respectively 0 to 29. 30 sequences with $v = 1$ included in the sequence set 2 are divided into 30 sequence groups, and index values are respectively 0 to 29.

If $\left\lfloor \dfrac{n_{ID}}{X} \right\rfloor \bmod Y = 0$ , it means that the first sequence is a sequence in the sequence set 1. In this case, $u = (f_{\mathrm{gh}} + n_{ID}) \bmod X$, and $f_{\mathrm{gh}}$ is 0, or $f_{\mathrm{gh}} = \left(\sum_{m=0}^{T-1} c\left(T\left(n_{s,f}^{\mu} N_{symb}^{slot} + l_0 + l'\right) + m\right) \cdot 2^m\right) \bmod 30$ . $v = 0$.

If $\left\lfloor \dfrac{n_{ID}}{X} \right\rfloor \bmod Y = 1$ , it means that the first sequence is a sequence in the sequence set 2. In this case, $u = (f_{\mathrm{gh}} + n_{ID}) \bmod X$, and $f_{\mathrm{gh}}$ is 0, or $f_{\mathrm{gh}} = \left(\sum_{m=0}^{T-1} c\left(T\left(n_{s,f}^{\mu} N_{symb}^{slot} + l_0 + l'\right) + m\right) \cdot 2^m\right) \bmod 30$ . $v = 1$.

In this way, for the sequence set 1, when group hopping or sequence hopping is enabled, it can be ensured that a legacy (legacy) terminal device can still select a sequence from 30 sequences with $u = 0,1 ...,29$ and $v = 0$, so that the sequence used by the legacy terminal device is the same as a sequence used by a new terminal device. Therefore, multiplexing can be performed on the same time-frequency resource and orthogonalization can be performed through different CSs. For the sequence set 2, when group hopping or sequence hopping is enabled, a sequence may be selected from 30 sequences with $u = 0,1 ...,29$ and $v = 1$, and may not conflict with the 30 sequences with $u = 0,1...,29$ and $v = 0$.

It should be noted that the legacy terminal device mentioned in this application may be an installed base terminal device, an existing terminal device, a terminal device that supports 3GPP R15 to R18, or the like. In other words, the legacy terminal device may select a sequence from the 30 sequences with $u = 0,1 ...,29$ and $v = 0$. The new terminal device may select a sequence from a sequence set to which the first sequence belongs in this solution, for example, select a sequence from the 30 sequences with $u = 0,1 ...,29$ and $v = 0$ and the 30 sequences with $u = 0,1 ... ,29$ and $v = 1$.

For another example, it is assumed that there are 60 sequences in total, and the 60 sequences are divided into two sequence sets: a sequence set 1 and a sequence set 2. 30 sequences with $v = 0$ included in the sequence set 1 are divided into 30 sequence groups, and index values are respectively 0 to 29. The 30 sequences with $v = 0$ and 30 sequences with $v = 1$ included in the sequence set 2 are divided into 30 sequence groups (the sequence group includes two sequences whose index values are respectively 0 and 1), and index values are respectively 0 to 29.

If $\left\lfloor \dfrac{n_{ID}}{X} \right\rfloor \bmod Y = 0$ , it means that the first sequence is a sequence in the sequence set 1. In this case, $u = (f_{\mathrm{gh}} + n_{ID}) \bmod X$, and $f_{\mathrm{gh}}$ is 0, or $f_{\mathrm{gh}} = \left(\sum_{m=0}^{T-1} c\left(T\left(n_{s,f}^{\mu} N_{symb}^{slot} + l_0 + l'\right) + m\right) \cdot 2^m\right) \bmod 30$ . $v = 0$.

If $\left\lfloor \dfrac{n_{ID}}{X} \right\rfloor \bmod Y = 1$ , it means that the first sequence is a sequence in the sequence set 2. In this case, $u = (f_{\mathrm{gh}} + n_{ID}) \bmod X$, and $f_{\mathrm{gh}}$ is 0, or

$$f_{\text{gh}} = \left( \sum_{m=0}^{T-1} c \left( T \left( \left( n_{slot}^{frame,\mu} (n_f \bmod F) + n_{s,f}^{\mu} \right) N_{symb}^{slot} + l_0 + l' \right) + m \right) \cdot 2^m \right) \bmod 60$$

$$v = \left\lfloor \frac{f_{\text{gh}} + n_{ID}}{\text{X}} \right\rfloor \bmod \text{Y} \ .$$

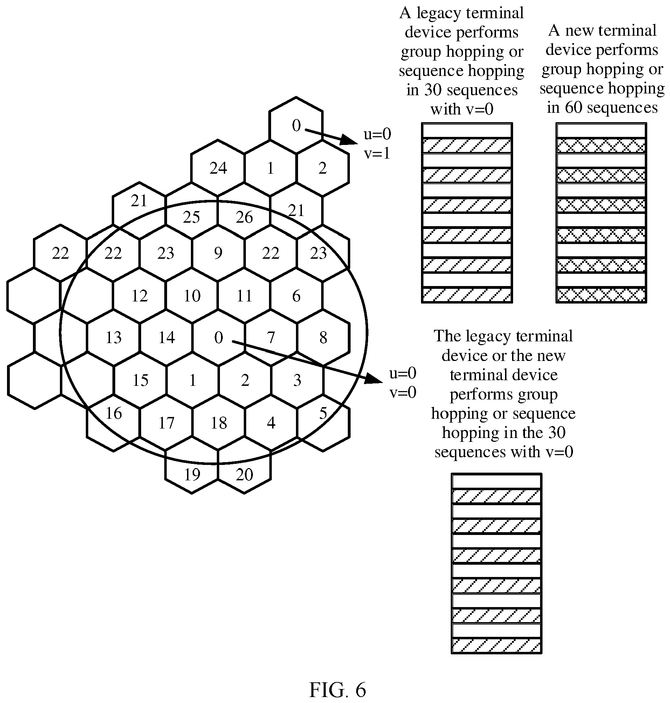

In this way, for the sequence set 1, when group hopping or sequence hopping is enabled, it can be ensured that the legacy terminal device can still select a sequence from the 30 sequences with v = 0, so that the sequence used by the legacy terminal device is the same as a sequence used by the new terminal device. Therefore, multiplexing can be performed on the same time-frequency resource and orthogonalization can be performed through different CSs. For the sequence set 2, when group hopping or sequence hopping is enabled, a sequence may be selected from the 60 sequences in the sequence set 2, so that better randomization effect can be obtained. With reference to FIG. 6, the legacy terminal device or the new terminal device may perform group hopping or sequence hopping in the sequence set 1, and the new terminal device may perform group hopping or sequence hopping in the sequence set 2.

It may be understood that, to implement the foregoing functions, the device includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the terminal device or the network device may be divided into functional modules based on the foregoing method examples. For example, each functional module may be obtained through division based on a corresponding function, or two or more functions may be integrated into one processing module. The integrated module may be implemented in a form of hardware, or may be implemented in a form of software functional module. It should be noted that, in embodiments of this application, module division is an example, and is merely a logical function division. In practice, another division manner may be used.

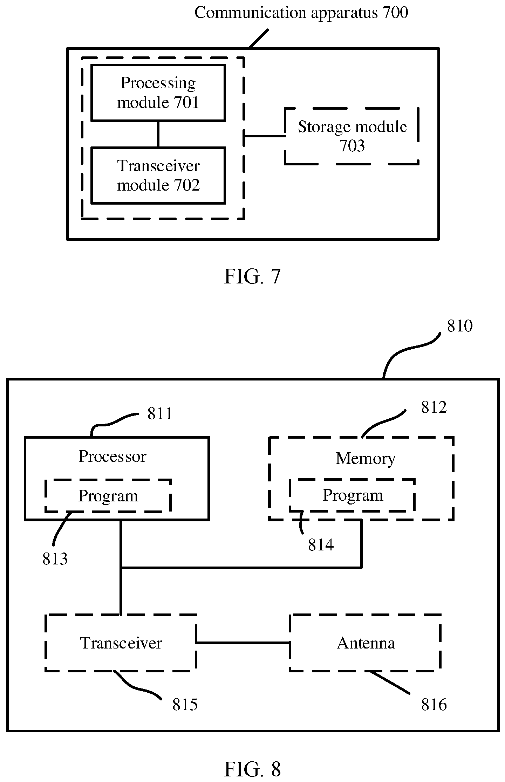

FIG. 7 is a diagram of a structure of a communication apparatus according to an embodiment of this application. The communication apparatus 700 may be applied to the method shown in any one of embodiments in FIG. 2 and FIG. 5. As shown in FIG. 7, the communication apparatus 700 includes a processing module 701 and a transceiver module 702. The processing module 701 may be one or more processors, and the transceiver module 702 may be a transceiver or a communication interface. The communication apparatus may be configured to implement a function of the terminal device or the network device in any one of the foregoing method embodiments, or configured to implement a function of a network element in any one of the foregoing method embodiments. The network element or network function may be a network element in a hardware device, a software function running on dedicated hardware, or an instantiated virtualization function on a platform (for example, a cloud platform). Optionally, the communication apparatus 700 may further include a storage module 703, configured to store program code and data of the communication apparatus 700.

In an instance, when the communication apparatus is used as a terminal device or a chip used in the terminal device, and performs the steps performed by the terminal device in the foregoing method embodiments, the transceiver module 702 is configured to specifically perform a sending and/or receiving action performed by the terminal device in any one of embodiments in FIG. 2 and FIG. 5, for example, support the terminal device in performing another process of the technology described in this specification; and the processing module 701 may be configured to support the communication apparatus 700 in performing a processing action in the foregoing method embodiments, for example, support the terminal device in performing another process of the technology described in this specification.

For example, the transceiver module 702 is configured to receive first information from a network device, where the first information indicates a first value, the first value and an offset are associated with a first index value and a second index value, and the first index value and the second index value are associated with a first sequence. The processing module 701 is configured to determine the first sequence based on the first information. The transceiver module 702 is further configured to send a reference signal to the network device, where the reference signal is determined based on the first sequence.

For another example, the transceiver module 702 is configured to receive first information from a network device, where the first information indicates a first value, the first value and an offset are associated with a first index value, and the first index value and a second index value are associated with a first sequence; when the first value meets a first condition, the second index value is a second value; and when the first value meets a second condition, the second index value is a third value, or the second index value is associated with the first value and the offset. The processing module 701 is configured to determine the first sequence based on the first information. The transceiver module 702 is further configured to send a reference signal to the network device, where the reference signal is determined based on the first sequence.

In a possible implementation, when the terminal device or the network device is a chip, the transceiver module 702 may be a communication interface, a pin, a circuit, or the like. The communication interface may be configured to input data to be processed to a processor, and may output a processing result of the processor to the outside. During specific implementation, the communication interface may be a general purpose input/output (general purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 701 may be a processor. The processor may execute computer-executable instructions stored in the storage module, so that the chip performs the method in any one of embodiments shown in FIG. 2 and FIG. 5. Further, the processor may include a controller, an arithmetic unit, and a register. For example, the controller is mainly responsible for instruction decoding, and transmitting a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an ASIC architecture, a microprocessor without interlocked piped stages (microprocessor without interlocked piped stages architecture, MIPS) architecture, an advanced reduced instruction set computer machines (advanced RISC machines, ARM) architecture, a second processor (network processor, NP) architecture, or the like. The processor may be a single-core or multi-core processor. The storage module may be a storage module inside the chip, for example, a register or a cache. Alternatively, the storage module may be a storage module, for example, a ROM or another type of static storage device that can store static information and instructions, or a RAM, located outside the chip.

It should be noted that functions respectively corresponding to the processor and the interface may be implemented by using a hardware design, or may be implemented by using a software design, or may be implemented by using a combination of software and hardware. This is not limited herein.

FIG. 8 is a diagram of a structure of another communication apparatus according to an embodiment of this application. It may be understood that the communication apparatus 810 includes means in necessary forms such as modules, units, elements, circuits, or interfaces, which are appropriately configured together to perform the solution. The communication apparatus 810 may be the foregoing terminal device or network device, or may be a component (for example, a chip) in these devices, to implement the method described in the foregoing method embodiments. The communication apparatus 810 includes one or more processors 811. The processor 811 may be a general-purpose processor, a dedicated processor, or the like. For example, the processor may be a baseband processor or a central processing unit. The baseband processor may be configured to process a communication protocol and communication data. The central processing unit may be configured to control the communication apparatus (for example, the terminal device, the network device, or the chip), to execute a software program and process data of the software program.

Optionally, in a design, the processor 811 may include a program 813 (which may also be referred to as code or instructions sometimes), and the program 813 may be run on the processor 811, so that the communication apparatus 810 performs the method described in the foregoing embodiments. In another possible design, the communication apparatus 810 includes a circuit (not shown in FIG. 8). The circuit is configured to implement functions such as the terminal device and the network device in the foregoing embodiments. Optionally, the communication apparatus 810 may include one or more memories 812, and a program 814 (which may also be referred to as code or instructions sometimes) is stored in the memory. The program 814 may be run on the processor 811, so that the communication apparatus 810 performs the method described in the foregoing method embodiments.

Optionally, the processor 811 and/or the memory 812 may further store data. The processor and the memory may be separately disposed, or may be integrated together.

Optionally, the communication apparatus 810 may further include a transceiver 815 and/or an antenna 816. The processor 811 may also be referred to as a processing unit sometimes, and performs control on the communication apparatus (for example, a terminal device or a network device). The transceiver 815 may also be sometimes referred to as a transceiver unit, a transceiver machine, a transceiver circuit, a transceiver, or the like, and is configured to implement a transceiver function of the communication apparatus through the antenna 816.

An embodiment of this application further provides a communication apparatus. The communication apparatus includes at least one processor. The at least one processor is configured to perform the method according to any one of embodiments in FIG. 2 and FIG. 5.

An embodiment of this application further provides a computer-readable storage medium. The computer-readable storage medium stores computer instructions. When the computer instructions are executed, a computer is enabled to perform the method according to any one of embodiments in FIG. 2 and FIG. 5.

An embodiment of this application further provides a computer program product. The computer program product includes computer program code. When the computer program code is run on a computer, the computer is enabled to perform the method according to any one of embodiments in FIG. 2 and FIG. 5.

An embodiment of this application further provides a chip. The chip includes at least one processor and an interface. The processor is configured to: read and execute instructions stored in a memory. When the instructions are run, the chip is enabled to perform the method according to any one of embodiments in FIG. 2 and FIG. 5.

The units described as separate components may or may not be physically separate, and components displayed as units may or may not be physical units, that is, may be located at one position, or may be distributed on a plurality of network units. Some or a part of the units may be selected based on actual requirements to achieve the objectives of the solutions of embodiments in this application. In addition, various network element units in embodiments of this application may be integrated into one processing unit, or each of the units may exist independently physically, or two or more units may be integrated into one unit. The integrated unit may be implemented in a form of hardware, or may be implemented in a form of software network element unit.

When the integrated unit is implemented in the form of software network element unit and sold or used as an independent product, the integrated unit may be stored in a computer-readable storage medium. Based on such an understanding, an essentially contributing part in the technical solutions of this application or all or a part of the technical solutions may be embodied in a form of software product. A computer software product is stored in a storage medium and includes several instructions for instructing a computer device (which may be a personal computer, a terminal device, a cloud server, a network device, or the like) to perform all or a part of the steps of the method in embodiments of this application. The storage medium includes any medium that can store program code, for example, a USB flash drive, a removable hard disk, a read-only memory (ROM, Read-Only Memory), a random access memory (RAM, Random Access Memory), a magnetic disk, or an optical disc. The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subjected to the protection scope of the claims.

## Claims

1. A communication method, comprising:

   receiving first information from a network device, wherein the first information indicates a first value, the first value and an offset are associated with a first index value and a second index value, and the first index value and the second index value are associated with a first sequence;
   determining the first sequence based on the first information; and
   sending a reference signal to the network device, wherein the reference signal is determined based on the first sequence.

2. The method according to claim 1, wherein the first index value meets the following condition:

$$u = \left(f_{\text{gh}} + n_{ID}\right)\text{mod X},$$

   wherein

   $f_{\text{gh}}$ is the offset, $n_{ID}$ is the first value, and X is an integer greater than or equal to 30; and
   the offset is determined based on a third index value, at least one index difference, and a second value, the third index value is an index value of a first time unit occupied by the reference signal in a system frame corresponding to a transmission occasion of the reference signal, the index difference is a difference between an index value of a time subunit occupied by the reference signal within the first time unit and an index value of a starting time subunit, the starting time subunit is a 1st time subunit occupied by the reference signal within the first time unit, and the second value is an integer greater than 30.

3. The method according to claim 1 or 2, wherein the second index value meets the following condition:

$$v = \left\lfloor \frac{f_{\text{gh}} + n_{ID}}{\text{X}} \right\rfloor \text{mod Y},$$

   wherein

$f_{\text{gh}}$ is the offset, $n_{ID}$ is the first value, X is an integer greater than or equal to 30, and Y is an integer greater than or equal to 2; and

the offset is 0; or

the offset is determined based on the third index value, the at least one index difference, and the second value, the third index value is the index value of the first time unit occupied by the reference signal in the system frame corresponding to the transmission occasion of the reference signal, the index difference is the difference between the index value of the time subunit occupied by the reference signal within the first time unit and the index value of the starting time subunit, the starting time subunit is the 1st time subunit occupied by the reference signal within the first time unit, and the second value is the integer greater than 30.

4. The method according to claim 3, wherein when group hopping group hopping or sequence hopping sequence hopping is disabled, the offset is 0.

5. The method according to claim 2 or 3, wherein when group hopping or sequence hopping is enabled, the offset is determined based on the third index value, the at least one index difference, and the second value.

6. The method according to any one of claims 1 to 5, wherein the offset meets the following condition:

$$f_{\text{gh}} = \left( \sum_{m=0}^{T-1} c \left( T \left( n_{s,f}^{\mu} N_{symb}^{slot} + l_0 + l' \right) + m \right) \cdot 2^m \right) \bmod K,$$

wherein

m is an integer greater than or equal to 0 and less than or equal *to* T - 1, T is a positive integer, c is a random sequence, $n_{s,f}^{\mu}$ is the third index value, $N_{symb}^{slot}$ is a quantity of time subunits contained in a time unit, $l_0$ is the index value of the starting time subunit, $l'$ is the at least one index difference, and K is the second value.

7. The method according to claim 2, 3, or 5, wherein that the offset is determined based on the third index value, the at least one index difference, and the second value comprises:

the offset is determined based on the third index value, the at least one index difference, the second value, and an index value of the system frame corresponding to the transmission occasion of the reference signal.

8. The method according to claim 7, wherein the offset meets the following condition:

$$f_{\text{gh}} = \left( \sum_{m=0}^{T-1} c \left( T \left( \left( n_{slot}^{frame,\mu} (n_f \bmod F) + n_{s,f}^{\mu} \right) N_{symb}^{slot} + l_0 + l' \right) + m \right) \cdot 2^m \right) \bmod K \qquad ,$$

wherein

m is an integer greater than or equal to 0 and less than or equal *to* T - 1, T is a positive integer, c is a random sequence, $n_{slot}^{frame,\mu}$ is a quantity of time units in a system frame, $n_f$ is the index value of the system frame corresponding to the transmission occasion of the reference signal, F is a positive integer, $n_{s,f}^{\mu}$ is the third index value, $N_{symb}^{slot}$ is a quantity of time subunits contained in a time unit, $l_0$ is the index value of the starting time subunit, $l'$ is the at least one index difference, and K is the second value.

9. The method according to any one of claims 2 to 8, wherein the second value is a product of X and Y, X is an integer greater than or equal to 30, and Y is an integer greater than or equal to 2.

10. The method according to any one of claims 2 to 9, wherein X is 30, Y is 0, and the second value is 60.

11. A communication method, comprising:

receiving first information from a network device, wherein the first information indicates a first value, the first value and an offset are associated with a first index value, and the first index value and a second index value are associated with a first sequence; when the first value meets a first condition, the second index value is a second value; and when the first value meets a second condition, the second index value is a third value, or the second index value is associated with the first value and the offset;
determining the first sequence based on the first information; and
sending a reference signal to the network device, wherein the reference signal is determined based on the first sequence.

12. The method according to claim 11, wherein

the first condition is $\left\lfloor \dfrac{n_{ID}}{X} \right\rfloor \mathrm{mod}\ Y = 0$ ; and/or

the second condition is $\left\lfloor \dfrac{n_{ID}}{X} \right\rfloor \mathrm{mod}\ Y = 1$ , wherein

$n_{ID}$ is the first value, X is an integer greater than or equal to 30, and Y is an integer greater than or equal to 2.

13. The method according to claim 11 or 12, wherein the first index value meets the following condition:

$$u = \left(f_{\mathrm{gh}} + n_{ID}\right)\mathrm{mod}\ X,$$

wherein

$f_{\mathrm{gh}}$ is the offset, $n_{ID}$ is the first value, and X is an integer greater than or equal to 30; and
the second index value is associated with the first value and the offset, the offset is determined based on a third index value, at least one index difference, and a fourth value, the third index value is an index value of a first time unit occupied by the reference signal in a system frame corresponding to a transmission occasion of the reference signal, the index difference is a difference between an index value of a time subunit occupied by the reference signal within the first time unit and an index value of a starting time subunit, the starting time subunit is a 1st time subunit occupied by the reference signal within the first time unit, and the fourth value is an integer greater than 30.

14. The method according to any one of claims 11 to 13, wherein that the second index value is associated with the first value and the offset comprises:
the second index value meets the following condition:

$$v = \left\lfloor \dfrac{f_{\mathrm{gh}} + n_{ID}}{X} \right\rfloor \mathrm{mod}\ Y,$$

wherein

$f_{\mathrm{gh}}$ is the offset, $n_{ID}$ is the first value, X is an integer greater than or equal to 30, and Y is an integer greater than or equal to 2; and
the offset is 0; or
the offset is determined based on the third index value, the at least one index difference, and the fourth value, the third index value is the index value of the first time unit occupied by the reference signal in the system frame corresponding to the transmission occasion of the reference signal, the index difference is the difference between the index value of the time subunit occupied by the reference signal within the first time unit and the index value of the starting time subunit, the starting time subunit is the 1st time subunit occupied by the reference signal within the first time unit, and the fourth value is the integer greater than 30.

15. The method according to claim 14, wherein when group hopping group hopping or sequence hopping sequence hopping is disabled, the offset is 0.

16. The method according to claim 13 or 14, wherein when group hopping or sequence hopping is enabled, the offset is determined based on the third index value, the at least one index difference, and the fourth value.

17. The method according to any one of claims 11 to 16, wherein the offset meets the following condition:

$$f_{\text{gh}} = \left( \sum_{m=0}^{T-1} c \left( T \left( n_{s,f}^{\mu} N_{symb}^{slot} + l_0 + l' \right) + m \right) \cdot 2^m \right) \bmod K$$

wherein
$m$ is an integer greater than or equal to 0 and less than or equal $to$ $T$-1, $T$ is a positive integer, $c$ is a random sequence, $n_{s,f}^{\mu}$ is the third index value, $N_{symb}^{slot}$ is a quantity of time subunits contained in a time unit, $l_0$ is the index value of the starting time subunit, $l'$ is the at least one index difference, and $K$ is the fourth value.

18. The method according to claim 13, 14, or 16, wherein that the offset is determined based on the third index value, the at least one index difference, and the fourth value comprises:
the offset is determined based on the third index value, the at least one index difference, the fourth value, and an index value of the system frame corresponding to the transmission occasion of the reference signal.

19. The method according to claim 18, wherein the offset meets the following condition:

$$f_{\text{gh}} = \left( \sum_{m=0}^{T-1} c \left( T \left( \left( n_{slot}^{frame,\mu} \left( n_f \bmod F \right) + n_{s,f}^{\mu} \right) N_{symb}^{slot} + l_0 + l' \right) + m \right) \cdot 2^m \right) \bmod K \quad ,$$

wherein
$m$ is an integer greater than or equal to 0 and less than or equal $to$ $T$-1, $T$ is a positive integer, $c$ is a random sequence, $n_{slot}^{frame,\mu}$ is a quantity of time units in a system frame, $n_f$ is the index value of the system frame corresponding to the transmission occasion of the reference signal, $F$ is a positive integer, $n_{s,f}^{\mu}$ is the third index value, $N_{symb}^{slot}$ is a quantity of time subunits contained in a time unit, $l_0$ is the index value of the starting time subunit, $l'$ is the at least one index difference, and $K$ is the fourth value.

20. The method according to any one of claims 13 to 19, wherein the fourth value is a product of X and Y, X is an integer greater than or equal to 30, and Y is an integer greater than or equal to 2.

21. The method according to any one of claims 13 to 20, wherein X is 30, Y is 2, and the fourth value is 60.

22. A communication apparatus, comprising a unit or a module configured to implement the method according to any one of claims 1 to 21.

23. A communication apparatus, wherein the communication apparatus comprises at least one processor, and the at least one processor is configured to perform the method according to any one of claims 1 to 21.

24. A computer-readable storage medium, wherein the computer-readable storage medium stores computer instructions, and when the computer instructions are executed, a computer is enabled to perform the method according to any one of claims 1 to 21.

25. A computer program product, wherein the computer program product comprises computer program code, and when the computer program code is run by a computer, the computer is enabled to perform the method according to any one of claims 1 to 21.

26. A chip, wherein the chip comprises at least one processor and an interface, the processor is configured to: read and execute instructions stored in a memory, and when the instructions are run, the chip is enabled to perform the method according to any one of claims 1 to 21.

FIG. 1

201: Send first information, where the first information indicates a first value, the first value and an offset are associated with a first index value and a second index value, and the first index value and the second index value are associated with a first sequence

202: Determine the first sequence based on the first information

203: Receive a reference signal from the terminal device, where the reference signal is determined based on the first sequence

FIG. 2

u=0   u=0   u=8   u=24   u=0   u=0   u=8   u=24
v=1   v=0   v=1   v=0    v=1   v=0   v=1   v=0

...  ▢  ...  ▢  ...  ▢  ...  ▢  ...  ▢  ...  ▢  ...  ▢  ...  ▢

5 ms  10 ms  15 ms  20 ms  25 ms  30 ms  35 ms  40 ms

Time window 1            Time window 2

**FIG. 3**

**FIG. 4**

```
┌──────────┐                                                    ┌──────────┐
│ Terminal │                                                    │ Network  │
│  device  │                                                    │  device  │
└────┬─────┘                                                    └────┬─────┘
```

501: Send first information, where the first information indicates a first value, the first value and an offset are associated with a first index value, and the first index value and a second index value are associated with a first sequence; when the first value meets a first condition, the second index value is a second value; and when the first value meets a second condition, the second index value is a third value, or the second index value is associated with the first value and the offset

502: Determine the first sequence based on the first information

503: Receive a reference signal from the terminal device, where the reference signal is determined based on the first sequence

FIG. 5

26

A legacy terminal device performs group hopping or sequence hopping in 30 sequences with v=0

A new terminal device performs group hopping or sequence hopping in 60 sequences

The legacy terminal device or the new terminal device performs group hopping or sequence hopping in the 30 sequences with v=0

FIG. 6

Communication apparatus 700

FIG. 7

FIG. 8

## INTERNATIONAL SEARCH REPORT

| International application No. |
|---|
| **PCT/CN2024/124258** |

| A. | CLASSIFICATION OF SUBJECT MATTER |
|---|---|

H04L 25/02(2006.01)i

According to International Patent Classification (IPC) or to both national classification and IPC

| B. | FIELDS SEARCHED |
|---|---|

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT, CNKI, VEN, ENTXTC, ENTXT, 3GPP: 参考信号, 产生, 第一, 第二, 索引, 对应, 关联, 偏移, 确定, 生成, 随机数, 相关, 小区, 序号, 序列, 映射, id, index, offset, sequence, first, second, reference signal, cell, association

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 101779400 A (QUALCOMM INC.) 14 July 2010 (2010-07-14) description, paragraph [0006] | 1-26 |
| A | CN 105681007 A (BEIJING SAMSUNG TELECOM R&D CENTER et al.) 15 June 2016 (2016-06-15) entire document | 1-26 |
| A | CN 110383703 A (HUAWEI TECHNOLOGIES CO., LTD.) 25 October 2019 (2019-10-25) entire document | 1-26 |
| A | CN 111181884 A (HUAWEI TECHNOLOGIES CO., LTD.) 19 May 2020 (2020-05-19) entire document | 1-26 |
| A | US 2023261827 A1 (HUAWEI TECHNOLOGIES CO., LTD.) 17 August 2023 (2023-08-17) entire document | 1-26 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **10 December 2024** | **12 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" rowspan="2">INTERNATIONAL SEARCH REPORT<br>Information on patent family members</td><td>International application No.</td></tr>
<tr><td>**PCT/CN2024/124258**</td></tr>
</table>

| Patent document cited in search report | | | Publication date (day/month/year) | Patent family member(s) | | | Publication date (day/month/year) |
|---|---|---|---|---|---|---|---|
| CN | 101779400 | A | 14 July 2010 | JP | 2010537509 | A | 02 December 2010 |
| | | | | CA | 2694203 | A1 | 19 February 2009 |
| | | | | EP | 2179526 | A1 | 28 April 2010 |
| | | | | RU | 2010109420 | A | 20 September 2011 |
| | | | | TW | 200924415 | A | 01 June 2009 |
| | | | | KR | 20100042657 | A | 26 April 2010 |
| | | | | WO | 2009023792 | A1 | 19 February 2009 |
| | | | | US | 2009135803 | A1 | 28 May 2009 |
| | | | | US | 8289946 | B2 | 16 October 2012 |
| | | | | AU | 2008286783 | B2 | 19 January 2012 |
| | | | | AU | 2008286783 | A1 | 04 March 2010 |
| CN | 105681007 | A | 15 June 2016 | EP | 3221994 | A1 | 27 September 2017 |
| | | | | EP | 3221994 | A4 | 28 February 2018 |
| | | | | EP | 3221994 | B1 | 18 March 2020 |
| | | | | KR | 20170088899 | A | 02 August 2017 |
| | | | | KR | 102418862 | B1 | 08 July 2022 |
| | | | | WO | 2016080776 | A1 | 26 May 2016 |
| | | | | US | 2017264355 | A1 | 14 September 2017 |
| | | | | US | 11095354 | B2 | 17 August 2021 |
| CN | 110383703 | A | 25 October 2019 | US | 2018302135 | A1 | 18 October 2018 |
| | | | | US | 10897295 | B2 | 19 January 2021 |
| | | | | WO | 2018188625 | A1 | 18 October 2018 |
| | | | | EP | 3580854 | A1 | 18 December 2019 |
| | | | | EP | 3580854 | A4 | 26 February 2020 |
| | | | | EP | 3580854 | B1 | 22 June 2022 |
| CN | 111181884 | A | 19 May 2020 | WO | 2020094155 | A1 | 14 May 2020 |
| US | 2023261827 | A1 | 17 August 2023 | EP | 4224961 | A1 | 09 August 2023 |
| | | | | EP | 4224961 | A4 | 29 November 2023 |
| | | | | WO | 2022082792 | A1 | 28 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311331856